# EUROPEAN PATENT APPLICATION

(11) **EP 3 361 428 A1**
(43) Date of publication of application: **15.08.2018**
(21) Application number: 17155747.3
(22) Date of filing: 10.02.2017
(51) Int. Cl.: G06Q 10/08, G06K 19/07

(54) **ASSET LOCATION IDENTIFICATION SYSTEM, PROGRAM AND METHOD**

(71) Applicant: FUJITSU LIMITED, Kawasaki-shi Kanagawa 211-8588 (JP)
(72) Inventor: SNELLING, David, Flackwell Heath, Buckinghamshire HP10 9LR (GB)
(74) Representative: Haseltine Lake LLP

(57) **Abstract**

Embodiments include an asset location identification system for identifying asset locations within a region of interest, the system comprising: asset identification tags, each connectable to a respective asset and configured to transmit respective tag identifying information; asset identification tag scanners configured to scan for asset identification tags and to record the tag identifying information being transmitted by asset identification tags identified during the scan; one or more asset identification processors configured to receive the recorded tag identifying information from the identification tag scanners; an identification sorting processor configured to access the tag identifying information recorded in the one or more asset identification processors and record as a non-sighting a scan time, indicating the time at which the asset identification tag scanner performed the scan, and a scan location, indicating the location within the region of interest of the asset identification tag scanner performing the scan at the scan time, against each asset identification tag not identified during the scan; an asset identification tag locating processor configured to access the identification sorting processor and calculate probabilistic location information for each of the asset identification tags, based on the scan time and the scan location of non-sightings recorded by the identification sorting processor, wherein the probabilistic location information is a value representing the probability of the presence of the asset identification tag within each of a plurality of notional sub-regions into which the region of interest is divided; and an asset location database configured to store the tag identifying information of each of the asset identification tags and the respective probabilistic location information.

## Description

### INTRODUCTION

This invention lies in the field of asset location identification. In particular, embodiments relate to scanning and locating tags attached to assets for locating the assets within a region of interest.

### BACKGROUND

The cost effectiveness of asset management and tracking has historically required a trade-off to be made between the cost of tracking an asset and the value of the asset itself. In the case of high value assets, such as fuel trucks for example, the assets are generally 'signed out' to authorised personnel who are deemed responsible for the asset until its safe return. Conversely, low value assets may simply be re-purchased as they appear to become lost, for example, IV stands in a hospital, since the investment cost of human resources or technological infrastructure which would be associated with asset management and tracking technology may not be considered justifiable.

Furthermore, the precision of the asset tracking information may vary according to the type of asset being tracked. For high value assets, knowing where a specific asset can be located may be highly important, and so the asset tracking information would need to be very detailed. However, for assets such as wheel chairs, simply indicating where the nearest asset is located may be sufficient asset tracking information.

There are a number of specific issues associated with attempting to lower the costs of such asset management and tracking systems. In general, the cost of the asset management tags may be reduced or the cost of the asset management tracking infrastructure may be reduced, but typically not both. For example, asset management tags may be connected to WiFi in order to determine their own location (via indoor GPS, beacons, smart WiFi routers, etc.). Although the use of WiFi technology reduces the complexity of the associated asset management tracking infrastructure, it has significant initial set-up costs, and ongoing maintenance costs, e.g. regular recharging or battery replacement. Moreover, this maintenance process would become more difficult if WiFi power is lost, since the system relies on the asset management tag reporting its location in order to locate the asset management tag and perform any maintenance.

The most common alternative to using WiFi connected asset management tags is to attach low cost Radio Frequency Identifications (RFID) tags to assets and install a facility scanner network to scan for the tags. Such a system may be installed to new builds without significant costs, but existing facilities pose cost barriers to deployment. For, example, in certain cases the area requiring coverage by the facility network scanner may include multiple environments, e.g. underground, open air, corridors or large open spaces, each of which would pose different issues and require a highly heterogeneous infrastructure. Other physical aspects of the environment, e.g. walls, can create blind spots, further make the deployment costly in terms of design and assurance.

### STATEMENTS OF INVENTION

Embodiments include an asset location identification system for identifying asset locations within a region of interest, the system comprising: asset identification tags, each connectable to a respective asset and configured to transmit respective tag identifying information; asset identification tag scanners configured to scan for asset identification tags and to record the tag identifying information being transmitted by asset identification tags identified during the scan; one or more asset identification processors configured to receive the recorded tag identifying information from the identification tag scanners; an identification sorting processor configured to access the tag identifying information recorded in the one or more asset identification processors and record as a non-sighting a scan time, indicating the time at which the asset identification tag scanner performed the scan, and a scan location, indicating the location within the region of interest of the asset identification tag scanner performing the scan at the scan time, against each asset identification tag not identified during the scan; an asset identification tag locating processor configured to access the identification sorting processor and calculate probabilistic location information for each of the asset identification tags, based on the scan time and the scan location of non-sightings recorded by the identification sorting processor, wherein the probabilistic location information is a value representing the probability of the presence of the asset identification tag within each of a plurality of notional sub-regions into which the region of interest is divided; and an asset location database configured to store the tag identifying information of each of the asset identification tags and the respective probabilistic location information.

Advantageously, embodiments of the present invention address the need for cost effective asset location within a region of interest, and provide means to locate a required asset identification tag or to declare it lost with a high degree of reliability.

The region of interest in which the asset location identification system operates is a physical environment which may include walls, multiple levels and other elements of infrastructure that inhibit low power radio or line-of-sight communication technologies. Examples of such regions of interest include airports, hospitals, factories, schools etc.

Advantages of embodiments of the asset location identification system include providing a mechanism for cost effective asset tracking by identifying the location of asset identification tags, which are connected to assets, within a large region of interest without relying on GPS-enabled tags or comparable tag-level technology. Embodiments of the present invention rely only on a small number of low cost Near Field Communication (NFC) readers, or RFID readers, and a larger number of low cost NFC or RFID tags thereby providing a reduction in cost of asset location identification.

The technological areas in which the system can be implemented are numerous and varied, since asset location identification is ubiquitous across many industries. The advantage of locating an asset identification tag without having complete and comprehensive knowledge of the region of interest in which the asset identification tag is located may be utilised in the following circumstances, for example: pupils within a school, patients within a hospital, prisoners within an open camp, operatives in closed regions (e.g. battle fields), animals on a farm, vehicles within a fleet, plant/tools on a construction site, electronic device on loan within a closed region etc.

The asset location identification system can provide a reduction in overall cost of asset management, location and tracking by employing probabilistic mathematical techniques to determine probabilistic location information which indicates the likely location of asset identification tags. The probabilistic location information indicating the location of an asset identification tag is based on information provided by a relatively small proportion of asset identification scanners compared to the overall number of asset identification tags within the system. Advantageously, by using such probabilistic location information, the likely location of asset identification tags can be calculated without the need for costly tag reading infrastructure and with a relatively limited number of asset identification tag scanners.

The non-sighting recorded by the identification sorting processor is taken to be an indication that a particular asset identification tag has not been scanned by the one or more identification tag scanners. Non-sightings may be recorded if asset identification tags have not been scanned for a predetermined period of time, for example, 10 seconds, 1 minute etc.

The probabilistic location information may be a value, for example, ranging from 0 to 1, -1 to 1, 0 to 10 etc.

The asset location database contains a record of each asset identification tag of the asset location identification system, the respective tag identifying information of each asset identification tag and the probabilistic location information calculated for each asset identification tag by the asset identification tag locating processor. Where the location of a particular asset identification tag is known by the asset location identification system, the asset location database may store that known location for use by the asset identification tag locating processor in calculating probabilistic location information.

The asset location database may also include a description of the respective asset that each asset identification tag is connected to.

A further advantage provided by the asset location identification system is identifying which assets are rarely used, and any assets which are identified as being rarely used can be eliminated from the asset inventory thereby removing any costs associated with storing and maintaining those assets.

The asset location identification system also provides the advantage of identifying commonly used assets. By identifying assets which are commonly used the asset identification system may determine which assets are critical for the operation of a business or organisation, and therefore ensure that such assets are always available in order to avoid any disruption to operations, e.g. by planning maintenance accordingly and increasing stock of the most commonly used assets.

The tag identifying information is an electromagnetic signal transmitted from asset identification tags which contains information capable of identifying a particular asset identification tag from another asset identification tag. The tag identifying information may be, for example, numbers, letters, alphanumeric, a binary number, a hexadecimal number, etc. The calculation of the probabilistic location information may include decreasing, relative to a distribution of conditional probability values per notional sub-region, a conditional probability value at sub-regions recorded as the scan location of non-sightings of the tag by the identification sorting processor.

Furthermore, the one or more asset identification processors are further configured to generate positive scan information, wherein the positive scan information includes the scan time, the scan location and the tag identifying information of the one or more asset identification tags identified by the asset identification scanner during the scan; and the identification sorting processor is further configured to access the positive scan information from each of the one or more asset identification processors, and for each scan, to record as a sighting the positive scan information against each identified asset identification tag. The probabilistic location information is further calculated by decreasing, relative to a distribution of conditional probability values per notional sub-region, a conditional probability value at sub-regions recorded as the scan location of non-sightings of the tag by the identification sorting processor, and increasing, relative to the distribution of conditional probability values per notional sub-region, the conditional probability value at sub-regions recorded as the scan location of sighting of the tag by the identification sorting processor.

The sighting recorded by the identification sorting processor is taken to be an indication that a particular asset identification tag has been scanned by the one or more identification tag scanners, and the tag identifying information of the respective asset identification tag has been recorded in the one or more identification tag scanners. Sightings recorded in the positive scan information combine with the non-sightings to create a spatial distribution of conditional probability values indicating the likelihood of the asset being present in particular notional sub-regions of the region of interest.

A notional sub-region is taken to be a sub-region of the region of interest as defined by the asset location identification system according to a predefined partitioning algorithm.

The notional sub-region need not be defined by physical boundaries within the region of interest. The boundaries may be defined by the asset location identification system in terms of co-ordinates within the region of interest.

Furthermore, the notional sub-regions may each have different dimensions and sizes according to the predefined partitioning algorithm, as defined by the asset location identification system. For example, notional sub-regions may be defined to cover smaller areas of the region of interest for high traffic regions and larger areas of the region of interest for low traffic regions.

Optionally, embodiments further comprise: a movement prediction processor configured to calculate a movement probability, wherein the movement probability indicates the probability that the tag will remain in the same scan location as that of the recorded sighting by applying a diffusion function to the probabilistic location information calculated by the asset identification tag locating processor.

The movement prediction processor is able to predict the likelihood that asset identification tags are likely to remain in the same location as that calculated by the asset identification tag locating processor. Advantageously, the movement prediction processor can improve the overall efficiency of the asset location identification system by indicating to the asset identification tag locating processor that a particular asset identification tag is unlikely to have moved, and therefore probabilistic location information need not be calculated. By instructing the asset identification tag locating processor not to re-calculate the probabilistic location information, the movement prediction processor improves the overall efficiency of the system by reducing any unnecessary processing.

Furthermore, the diffusion function of the movement prediction processor may be adapted for specific types of assets, and thereby take into account the varying movement pattern and movement speed of different types of assets to which the asset identification tags are connected. For example, the diffusion function of a vehicle may predict more movement within the region of interest compared to the diffusion function of a student within a campus.

The diffusion function of the movement prediction processor may be applied to the probabilistic location information periodically at predetermined time intervals of, for example, 10 seconds, 1 minute or following each scan performed by each of the asset identification tag scanners.

Embodiments may also include: a lost asset identification tag notification processor configured to access the asset location database and flag as potentially lost each asset identification tag for which a sighting has not been recorded for a predetermined period of time and/or a predetermined number of scans.

The lost asset identification tag notification processor may flag a particular asset identification tag as potentially being lost if the identification sorting processor does not access positive scan information, from at least one of the one or more asset identification processors, and consequently record a sighting for that particular asset identification tag for a predetermined period of time and/or a predetermined number of scans. The predetermined period of time may be, for example, 10 minutes, 12 hours, 1 day, etc. The predetermined number of scans may be, for example, 2, 5, 100 etc.

Upon determining that a particular asset identification tag is lost, the lost asset identification tag notification processor may generate an alert, wherein the alert includes the time at which the asset identification tag was determined to be lost, and the identification information of the lost asset identification tag. The alert may then be transmitted, via a wireless communication system, to an authorised party, where the authorised party may be, for example, the owner of the asset that is connected to the lost asset identification tag.

An asset identification tag may be flagged as potentially lost if the most recent probabilistic location information for any notional sub-region is above a predetermined probability threshold and/or if the most recent scan location associated with the probabilistic location information is within a predetermined distance from the outermost perimeter of the region of interest containing the identification tag scanners.

Furthermore, one or more of the asset identification tags are connectable to a respective stationary asset which remain in a fixed location within the region of interest, wherein the location of the stationary asset within the region of interest is recorded in the asset location database.

A stationary asset is taken to be an asset that is in a fixed location. The stationary asset may be a physical object such as a reception desk, or virtual such as the doorway into an emergency room. Fixed assets may have their location recorded within the asset location database.

In recording the location of stationary assets in the asset location database, the location of the asset identification tag scanners may be calculated by the asset location database. The calculation of the location of a particular asset identification scanner may be based on the particular asset identification tag scanner having identified a particular asset identification tag and the location of that particular asset identification tag being stored in the asset location database. Once the location of the asset identification tag scanner is known by the asset location database the scan location can be generated and transmitted to the one or more asset identification processors for generating positive scan information for any other asset identification tags that have also been identified by the same asset identification tag scanner. Advantageously, by providing a mechanism for calculating the location of asset identification tag scanners based on the location of asset identification tags connected to stationary assets, internal navigation systems are not required to determine asset identification tag locations thereby reducing the overall cost of the asset location identification system.

Optionally, one or more of the asset identification tags are connectable to a respective mobile asset which moves between different locations inside and/or outside of the region of interest, wherein the location of the mobile asset within the region of interest is determined by an internal navigation system, and the determined location is transmitted to the asset identification tag locating processor for use in calculating probabilistic location information.

The determined location may be transmitted directly to the asset identification tag locating processor by the internal navigation system itself. Alternatively, the determined location may be stored in a dedicated memory location of the asset location identification system and subsequently accessed by the asset identification tag locating processor.

The internal navigation system of the mobile asset may be, for example, a global positioning system (GPS). The internal navigation system may be configured to transmit the location of the asset identification tag connected to the mobile asset to the asset location database for storage. The location of the same asset identification tag, stored within the asset location database, may also be transmitted to the asset identification tag locating processor to be used in calculating probabilistic location information for other asset identification tags which are not connected to a mobile asset.

Advantageously, the asset identification tag connected to the respective mobile asset is able to transmit identifying information to any of the identification tag scanners of the asset location identification system that are within the region of interest.

Furthermore, each of the asset identification tag scanners further comprises an identification tag signal measuring sensor configured to measure a signal strength of a signal carrying the tag identifying information being transmitted by each respective asset identification tag and to report the measured signal strength to the asset identification tag locating processor via the asset identification processor, the asset identification tag locating processor being configured to determine the location of each scanned asset identification tag based on the measured signal strength and the location of the asset identification tag scanner performing the scan. The identification tag signal measuring sensor may be, for example, a thermistor sensor, a thermocouple sensor or a diode sensor.

Other techniques may be used for determining the location of each asset identification tag. Such techniques include, for example: Cell of origin (nearest cell), Distance-Based (Lateration) Techniques such as (i.e. Time of Arrival, Time Difference of Arrival (TDoA), Received Signal Strength (RSS)), Angle-Based (Angulation) Techniques (i.e. Angle of Arrival (AoA)) or Location Patterning (Pattern Recognition) Techniques.

Optionally, the asset identification tag locating processor is configured to calculate location information for each of the asset identification tags at plural instances over a time period; the system further comprising: a tracking processor configured to, for a particular asset identification tag, use each of the plural instances of the probabilistic location information to identify a most likely location of the particular asset identification tag, and to track a most likely location of the particular asset identification tag over the time period by linking the most likely locations according to chronological order of the respective instances.

The plural instances of time at which the probabilistic location information is calculated may be, for example, 2 times, 5 times, 10 times, etc.

The time periods of which the plural instances of time are calculated may be, for example, every 1 second, 30 seconds, 5 minutes, etc.

The tracking processor may generate movement information for individual asset identification tags being tracked within the region of interest based on the chronological order of the respective instances of the probabilistic location information. Such movement information may indicate areas in which multiple asset identification tags converge.

Advantageously, the tracking processor may be used to monitor the distance travelled by asset identification tags, and therefore determine when the asset connected to the asset identification tag is due for servicing and maintenance.

The asset identification tags may report their speed and direction to the tracking processor. Advantageously, by acquiring knowledge of individual asset identification tag speed and direction, the tracking processor is able to make predictions on where a particular asset identification tag is heading and the estimated time of arrival.

Optionally, the asset identification tags are radio frequency asset identification tags which transmit the respective tag identifying information.

The radio frequency asset identification tags may be, for example, passive RFID tags, active RFID tags, programmable passive RFID tags, programmable active RFID tags or data tags.

The frequency range in which the RFID tags function may be low frequency (LF), e.g. between 30kHz and 300kHz, high frequency (HF), e.g. between 3MHz and 30MHz or ultra high frequency (UHF), e.g. between 300MHz and 3GHz.

Optionally, the asset identification tag scanners are radio frequency asset identification tag readers which read the tag identifying information which is transmitted by the radio frequency identification tags.

The radio frequency asset identification tag readers are configured to read tag identifying information transmitted by the radio frequency asset identification tags operating at either LF, HF or UHF. The radio frequency asset identification tag readers may be compatible with passive RFID tags, active RFID tags, programmable passive RFID tags, programmable active RFID tags and/or data tags.

Embodiments may be further configured to: identify the most recent positive scan information, generated by the one or more asset identification processors for a respective asset identification tag; record the identified most recent positive scan information against the respective asset identification tag; and indicate to the asset identification tag locating processor the most recent positive scan information as the positive scan information for processing.

Advantageously, by only recording the most recently generated positive scan information for each asset identification tag, the identification sorting processor reduces the amount of processing that must be performed by the asset identification tag locating processor. In reducing the amount of processing required, the identification sorting processor improves the overall efficiency of the asset location identification system by removing redundant processing of historic positive scan information which has become outdated.

The most recent positive scan information is the most up to date piece of positive scan information that has been generated by the one or more asset identification processors for a particular asset identification tag.

Optionally, the identification sorting processor is further configured to group the sightings and non-sightings into time groups, where each time group contain sightings and non-sightings which were recorded within a predetermined time period, and the asset identification tag locating processor calculates probabilistic location information for sightings and non-sightings contained within the most recent time group.

In order for the asset identification tag locating processor to achieve the most accurate results the sightings and non-sightings should be numerous and temporally close together. Advantageously, by constraining recorded sightings and non-sightings to the most recent time group, the identification sorting processor ensures that the most up to date group of asset identification tag sightings and non-sightings is used in calculating the probabilistic location information, and therefore the accuracy of the probabilistic location information is improved.

A time group is taken to be a predetermined period of time in which sightings and non-sightings have been recorded by the identification sorting processor. Each time group follows on from a previous time group in a sequential series of time groups. A predetermined period of time for time groups may be determined by an authorised person as, for example, 5 seconds, 5 minutes, 1 hour etc. Time groups may overlap each other.

The predetermined period of time for time groups may be altered according to the number of asset identification tags that are sighted during the time period. For example, if the asset identification tag scanners only identify two asset identification tags during a time period of 15 minutes the predetermined time period may be extended to, for example, 45 minutes. Alternatively, if the asset identification tag scanners identify 50 asset identification tags during a period of 5 minutes the predetermined time period may be reduced to, for example, 2 minutes.

Optionally, the asset identification locating processor is further configured to determine likely locations of an asset identification tag based on the conditional probability value for each notional sub-region, wherein notional sub-regions having greater conditional probability values than other notional sub-regions are ranked as more likely locations of the asset identification tag.

Embodiments of another aspect include an asset location identification method for identifying asset locations within a region of interest, the method comprising: transmitting respective tag identifying information from asset identification tags connected to respective assets; scanning for asset identification tags and recording the tag identifying information being transmitted by asset identification tags identified during the scanning; accessing the recorded tag identifying information and recording as a non-sighting a scan time, indicating the scanning time, and a scan location, indicating the location within the region of interest that the scanning is performed at the scan time, against each asset identification tag not identified during the scanning; calculating probabilistic location information for each of the asset identification tags, based on the scan time and the scan location of non-sightings recorded by the identification sorting processor, wherein the probabilistic location information is a value representing the probability of the presence of the asset identification tag within each of a plurality of notional sub-regions into which the region of interest is divided; and storing the tag identifying information of each of the asset identification tags and the respective probabilistic location information.

Embodiments of another aspect include a computer program which, when executed by a computing apparatus, causes the computing apparatus to function as a computing apparatus defined above as an invention embodiment.

Embodiments of another aspect include a computer program which, when executed by a computing apparatus, causes the computing apparatus to perform a method defined above or elsewhere in this document as an invention embodiment.

Furthermore, embodiments of the present invention include a computer program or suite of computer programs, which, when executed by a plurality of interconnected computing devices, cause the plurality of interconnected computing devices to perform a method embodying the present invention.

Embodiments of the present invention also include a computer program or suite of computer programs, which, when executed by a plurality of interconnected computing devices, cause the plurality of interconnected computing devices to function as a computing apparatus defined above or elsewhere in this document as an invention embodiment.

### DETAILED DESCRIPTION

Embodiments will now be described with reference to the accompanying drawings, in which:
Figure 1 is a schematic diagram of an asset location identification system;
Figure 2 is a schematic diagram of a particular embodiment of an asset location identification system;
Figure 3 is a flowchart outlining the process of an asset location identification system;
Figure 4 is a graphical representation of the resulting output of an embodiment of an asset location identification system; and
Figure 5 is a hardware architecture of an embodiment.

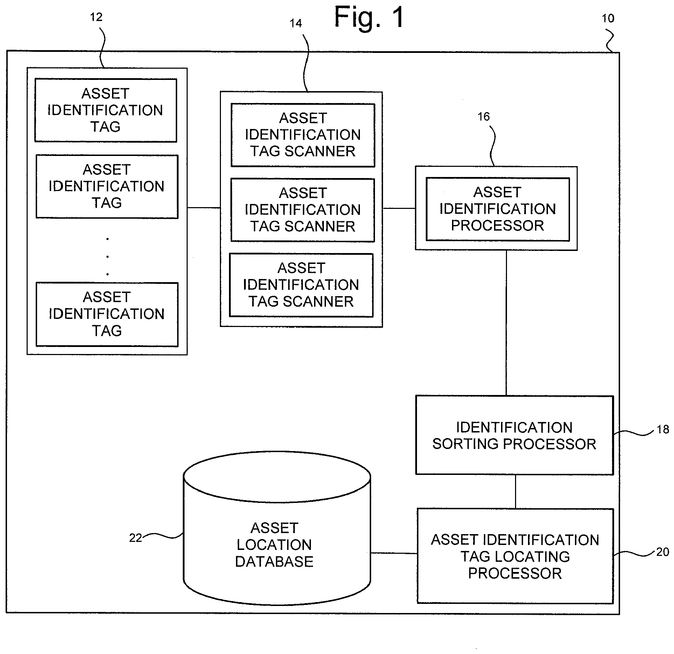

Figure 1 illustrates an asset location identification system 10. The system 10 includes a plurality of asset identification tags 12, a plurality of asset identification tag scanners 14, one or more asset identification processors 16, an identification sorting processor 18, an asset identification tag locating processor 20 and an asset location database 22. The lines between the units represent the ability of the units to transfer information between one another. Other exchanges of data beyond those illustrated may also occur, the illustration represents specific data exchanges, as detailed below.

The asset identification processor(s) 16, identification sorting processor 18, and asset identification tag locating processor 20 can each be implemented as processor hardware coupled to memory hardware. The same or different processor hardware can be used to implement each from among the asset identification processor(s) 16, identification sorting processor 18, and asset identification tag locating processor 20. Likewise, the same or different memory hardware may be coupled to said processor hardware. The memory hardware stores processing instructions and can also store data before, during, and/or after processing. In particular, a first processor hardware and first memory hardware can be used to implement the asset identification processor 16, and a second processor hardware (separate from the first processor hardware) and second memory hardware (separate from the first memory hardware) can be used to implement the identification sorting processor 18, asset identification tag locating processor, and optionally also the asset location database 22. The second processor hardware and second memory hardware may also implement the movement prediction processor, the lost asset identification tag notification processor, and the tracking processor.

The number of asset identification tags 12, asset identification tag scanners 14 and asset identification processors 16 within the asset location identification 10 system may be determined by a ratio of, for example, 10:3:1, 50:15: 3 etc. Alternatively, the distribution of tags 12, scanners 14 and identification processors 16 may be determined by an authorised user as, for example, thirty tags 12, eight scanners 14 and three identification processors. In other words, the asset location identification system 10 provides an advantage of requiring fewer asset identification tag scanners 14 relative to the number of asset identification tags 12, and fewer asset identification processors 16 relative to the number of asset identification tag scanners 14.

Each of the asset identification tags 12 are connectable to a respective asset and configured to transmit respective tag identifying information.

The asset identification tags 12 may be active RFID tags which include a transmitter and power source to enable the tag to transmit its respective tag identifying information.

Active RFID asset identification tags may function as a transponder whereby the tag is activated upon receipt of a radio signal from an asset identification tag scanner 14, which causes the asset identification tag 12 to power on and respond to the asset identification scanner 14 by transmitting the tag identifying information. Advantageously, active asset identification tags 12 which function as a transponder do not actively transmit asset identifying information, and hence conserve power and improve efficiency.

Alternatively, active RFID asset identification tags may operate as a beacon whereby the asset identifying information is transmitted at predetermined intervals and received by one or more asset identification tag scanners 14. Advantageously, active asset identification tags 12 which function as a beacon provide accurate and precise location information indicating the location of the asset identification tag 12 within the region of interest.

The asset identification tags 12 may alternatively be passive RFID tags wherein the asset identification tag scanner 14 transmits an activation radio signal to the asset identification tag 12. Upon receipt of the activation radio signal the asset identification tag 12 is configured to use the signal power of the received radio signal to transmit the respective tag identifying information to one or more asset identification tag scanners 14. Advantageously, passive asset identification tags do not require a power source, and are hence relatively cheap, quick and easy to manufacture.

The asset identification tags may be, for example, RFID labels, RFID wet inlays, embedded RFID tags, metal-mounts RFID tags, RFID badges or RFID cards.

The tag identifying information may be programmed into each asset identification tag 12 by an authorised person. Alternatively, the tag identifying information may be programmed onto the tag at the time of manufacture. The tag identifying information may be erased, updated or changed according to the requirements of the user of the asset location identification system 10.

The asset identification tags 12 are configured to transmit the tag identifying information to the one or more asset identification scanners 14 as an electromagnetic wave, which contains identifying information in the form of digital information, as ones and zeros. The digital information may be communicated using, for example, amplitude-shift keying, phase-shift keying or frequency-shift keying.

The asset identification tags 12 comprise an integrated circuit and an antenna configured to transmit tag identifying information to the asset identification tag scanners 14.

The asset identification tag scanners may be, for example, fixed RFID readers, handheld RFID readers, Power-Over Ethernet (POE) RFID readers, ESB RFID readers or Wi-Fi readers. Hence, the asset identification tag scanners may be fixed in a permanent location or capable of moving throughout the region of interest.

The asset identification tag scanners may also be referred to as interrogators.

The asset identification tag scanners 14 are configured to scan for asset identification tags 12 and to record the tag identifying information received from asset identification tags 12 during the scan.

The scan frequency at which the asset identification tag scanners perform a scan may be a predetermined frequency of, for example, 5 seconds, 5 minutes, 1 hour etc. Alternatively, for asset identification tag scanners that are capable of travelling within the region of interest, a scan may be performed each time the asset identification tag scanner crosses a border between two notional sub-regions into which the region of interest is divided.

The receiving and transmitting antennas used by the asset identification tags and the asset identification tag scanners may be linear antennas, which are capable of propagating/receiving signals over/from longer distances than other types of antennas such as, for example, circular polarised antennas.

The receiving and transmitting antennas used by the asset identification tags and the asset identification tag scanners may alternatively be circular polarised antennas, which have a wide range of directional coverage, and are capable of propagating/receiving signals over/from a wider direction of orientation than other types of antennas such a, for example, linear antennas.

The scan range of the scan performed by the asset identification tag scanners 14 is determined by the type of transmission antennas used by the asset identification tags 12 and the type of receiving antennas used by the asset identification tag scanners 14. The scan range may be, for example, either 'near field' (short range) or 'far field' (long range).

The asset identification scanners 14 may be further configured to record the type of signal as either a near field signal or a far field signal as part of the tag identifying information, and the signal type may subsequently be included in the positive scan information generated by the one or more asset identification processors 16.

By including the signal type in the positive scan information, the asset identification tag locating processor 20 may use the information of the signal type in calculating probabilistic information. For example, when calculating the probabilistic location information the asset identification tag locating processor 20 may take into account the fact that the location of an asset identification tag 12 can be more accurately determined as the scan location from a near field signal than a far field signal.

The tag identifying information is received by the asset identification scanners 14 from the asset identification tags 12, for example, as digital information, as discussed above. Upon receipt of the tag identifying information, the asset identification tag scanners 14 are configured to store the tag identifying information for each asset identification tag 12 in a dedicated memory location. The dedicated memory location may be in the form of localised storage, wherein the hardware of the memory device providing the dedicated memory location is housed within the asset identification tag scanner 14 itself. Alternatively, the dedicated memory location may be in the form of cloud storage, wherein the tag identifying information is relayed to a cloud storage service via WiFi or any other type of wireless communication.

The asset identification tag scanners 14, or the cloud storage, are configured to subsequently transmit the stored tag identifying information to one of the one or more asset identification processors 16 for use in recording non-sightings and in generating positive scan information (in the case of multiple asset identification processors a service such as a daemon may prevent two or more asset identification processors processing the same scan data, to prevent duplication).

The asset identification tag scanners 14 comprise an integrated circuit and an antenna configured to receive tag identifying information from the asset identification tags 12.

The one or more asset identification processors 16 are configured to receive the recorded tag identifying information from the identification tag scanners 14 and generate positive scan information, wherein the positive scan information includes a scan time, indicating the time at which the asset identification tag scanner 14 performed the scan, a scan location, indicating the location within the region of interest of the asset identification tag scanner 14 performing the scan at the scan time, the tag identifying information of the one or more asset identification tags 12 identified by the asset identification scanner 14 during the scan.

The tag identifying information may be transmitted to the one or more asset identification processors 16 from the asset identification tag scanners 14 at a predetermined frequency of intervals. For example, upon expiry of each predetermined time group, when a predetermined number of scans has been exceeded or every 5 minutes. The one or more asset identification processors 16 are configured to store each received piece of tag identifying information in a dedicated memory location of the asset location identification system 10 before the tag identifying information is processed.

The communication connection between the asset identification tag scanners 14 and the one or more asset identification processors may be via a bus, wherein a hardware connection exists between the asset identification scanners 14 and the one or more asset identification processors 16. Alternatively, the communication connection may be a wireless connection via, for example, WiFi technology. The communication connection created by the hardware connection or wireless connection may be an intermittent connection, whereby tag identifying information stored by the asset identification tag scanners 14 is transmitted to the one or more asset identification processors 16 when a connection becomes available. For example, a hardware connection may be available when the asset identification tag scanners 14 are stationary, or a wireless connection may be available when the asset identification tag scanners 14 are within range of the WiFi technology.

The one or more asset identification processors 16 may use a plurality of computer processors to generate positive scan information for each of the pieces of tag identifying information provided by each of the asset identification tag scanners 14. The scan time element of the positive scan information may be determined based on a time stamp applied by the asset identification tag scanner responsible for performing the scan. Alternatively, the scan time may be determined based on the time at which the particular asset identification tag scanner 14 transmits the tag identifying information, for which positive scan information is being generated, to the one or more asset identification processors 16. The scan location element of the positive scan information may be determined from GPS information acquired by the asset identification tag scanners 14 and transmitted to the one or more asset identification processors 16 as part of the tag identifying information. Alternatively, the scan location may be determined based on a variety of position locating techniques, such as Cell of origin (nearest cell), Distance-Based (Lateration) Techniques such as (i.e. Time of Arrival, Time Difference of Arrival (TDoA), Received Signal Strength (RSS)), Angle-Based (Angulation) Techniques (i.e. Angle of Arrival (AoA)) or Location Patterning (Pattern Recognition) Techniques, as discussed above.

Upon generation of the positive scan information, the one or more asset identification processors 16 may store the positive scan information in a dedicated memory location of the asset location identification system 10. The dedicated memory location may be a local storage device or cloud storage. The positive scan information may be stored for a predetermined amount of time, for example, 5 seconds, 10 minutes, 5 hours or 5 days, at which point the positive scan information may be deleted. Alternatively, the positive scan information may be stored until it is accessed by the identification sorting processor 18, at which point the positive scan information is deleted.

Each of the one or more identification processors 16 are hardware resources that comprise a processor for executing processing instructions stored on a memory, said instructions causing the processor to generate positive scan information.

The identification sorting processor 18 is configured to access the positive scan information from each of the one or more asset identification processors 16, and for each scan, to record as a sighting the positive scan information against each identified asset identification tag and to record as a non-sighting the scan location and scan time against each remaining asset identification tag.

The identification sorting processor 18 may access the positive scan information via a bus, wherein a hardware connection exists between the one or more asset identification processors 16 and the identification sorting processor 18. Alternatively, the communication connection may be a wireless connection via, for example, WiFi technology.

After accessing the positive scan information from each one or more asset identification processor 16 the identification sorting processor 18 stores each piece of accessed positive scan information in a dedicated memory location of the asset location identification system 10. The sorting process is then performed by the identification sorting processor 18 whereby, for example, a sighting flag is generated to represent a sighting for each asset identification tag 12 having had positive scan information generated by the one or more asset identification processors, and a non-sighting flag is generated to represent a non-sighting for each asset identification tag 12 not having had positive scan information generated by the one or more asset identification processors 16.

The sightings and non-sightings, and their respective flags, may be recorded in a sighting/non-sighting database, wherein the sighting/non-sighting database contains a list of each asset identification tag 12 within the asset location identification system 10. For each asset identification tag 12, the sighting/non-sighting database contains a list of scans, wherein the list of scans are recorded in chronological order, and for each scan that has had positive scan information generated the respective positive scan information is recorded against the relevant asset identification tag 12. Where positive scan information has not been generated by the one or more asset identification processors 16 for a particular asset identification tag 12 during a particular scan, the sighting/non-sighting database is configured to instead record the scan location and scan time for the respective scan against the relevant asset identification tag 12 as a non-sighting.

In a case where multiple asset identification tag scanners 14 identify the same asset identification tag 12, and the one or more asset identification processers 16 subsequently generate positive scan information for each of the multiple sightings of the same asset identification tag 12, the identification sorting processor 18 may only record the most recently generated positive scan information for the asset identification tag 12 in order to increase efficiency by reducing processing power usage and increase the amount of memory available to the asset location identification system 10.

The identification sorting processor 18 is a functional component that may be implemented as a processor for executing processing instructions stored on a memory, said instructions causing the processor to record positive scan information as sightings and record the scan location and the scan time of a particular scan as a non-sighting for tags not detected in the scan.

The asset identification tag locating processor 20 is configured to access the identification sorting processor 18 and to calculate probabilistic location information for each of the asset identification tags 12, wherein the probabilistic location information is a value representing the probability of the presence of the asset identification tag 12 within each of a plurality of notional sub-regions into which the region of interest is divided. For example, wherein the probabilistic location information is calculated by decreasing, relative to a uniform distribution of values per notional sub-region, the value at sub-regions recorded as the location of non-sightings of the tag by the identification sorting processor 18, and increasing, relative to the uniform distribution of values, the value at sub-regions recorded as the scan location of sighting of the tag by the identification sorting processor 18.

The asset identification tag locating processor 20 may access the sighting information and non-sighting information from the identification sorting processor 18 via a bus, wherein a hardware connection exists between the asset identification tag locating processor 20 and the identification sorting processor 18. Alternatively, the communication connection may be a wireless connection via, for example, WiFi technology.

The asset identification tag locating processor 20 is configured to store each piece of positive scan information, relating to a sighting, and each scan location and scan time, relating to a non-sighting, in a dedicated memory location of the asset location identification system 10 before the probabilistic location information is calculated.

The region of interest is divided into notion sub-regions by the asset identification tag locating processor 20, wherein each sub-region is, for example, a 1 m by 1 m square.

The region of interest may be divided into sub-regions, for example, by a notional grid system having geographical coordinated for defining a specific location within the region of interest. The geographical coordinates may be, for example, a Cartesian coordinate system, a polar coordinate system, a cylindrical and spherical coordinate system, etc.

The region of interest may be, for example, a physical building, a campus, a facility, a geographical region, etc. The area of the region of interest is finite and the outermost perimeter of the region of interest may be defined by a geofence, wherein the geofence defines virtual geographical boundaries. If an asset identification tag travels outside the region of interest it is considered lost by the asset location identification system, and cannot be located whilst outside the region of interest.

The uniform distribution of values is generated for each notional sub-region by the asset identification tag locating processor 20 upon activation of the asset location identification system 10. The uniform distribution of values may be re-set to, for example, zero each time the asset location identification system 10 is turned off. Alternatively, the uniform distribution of values may be set for the first use of the asset location identification system 10, and for each subsequent use the most recent distribution of values may be used as a starting distribution of values, by saving the most recent distribution of values in memory.

The probabilistic location information is calculated using stochastic probability mathematical methods to generate a conditional probability value which indicates a probability that a particular asset identification tag is located at a particular sub-region. The conditional probability value is then summed with the starting distribution of values generated by the asset identification tag locating processor 20. The resulting summation of values represents the probabilistic location information which indicates the likelihood of each of the asset identification tags 12 within the asset location identification system 10 being located at each notional sub-region (relative to the others) into which the region of interest is divided.

The most likely location of a particular asset identification tag 12 may be determined by identifying the notional sub-region having the probabilistic location information with the largest positive deviation from the uniform distribution of values. The asset identification tag locating processor 20 is further configured to rank the likelihood of a particular asset identification tag being located within each notional sub-region according the magnitude of positive deviation, from the uniform distribution of values, of each respective piece of probabilistic location information.

As an example, the most likely location of a particular asset identification tag 12 may be determined by dividing a tag probability value, for each asset identification tag, among each of the notional sub-regions according to stochastic probability mathematical methods. For example, a particular asset identification tag may initially have the tag probability value of 1, and this tag probability value is divided amongst each notional sub-region by calculating the conditional probability value for each notional sub-region and assigning a proportional weighting of the tag probability value to each notional sub-region according to the calculated tag probability value. This proportional weighting may be, for example, 0.4 for a high probability notional sub-region and 0.08 for a low probability notional sub-region, and thereby the tag probability value in this example would be 0.4 and 0.08 respectively. A ranking of likely notional sub-regions within which a particular asset identification tag 12 is located may then be generated based on the calculated tag probability value, with greater tag probability values initiating a greater probability than lower tag probability values.

The asset identification tag locating processor 20 calculates probabilistic location information using stochastic modelling, for example using sequential Bayesian filtering in which a probability density function is estimated recursively over time using incoming measurements and dynamic modelling. Examples of such sequential Bayesian filters include a Kalman filter, an Extended Kalman filter, an Unscented Kalman filter and a Particle filter.

The probabilistic location information may be subsequently transmitted to the asset location database 22 via a bus, wherein a hardware connection exists between the asset identification tag locating processor 20 and the asset location database 22. Alternatively, the communication connection may be a wireless connection via, for example, WiFi technology.

The asset identification tag locating processor 20 is a functional unit that may be implemented as a processor for executing processing instructions stored on a memory, said instructions causing the processor to calculate probabilistic location information.

The processing performed by the asset identification tag locating processor 20 can be implemented by a plurality of processors, including but not limited to one or more central processors (CPUs). The memory may comprise a non-volatile storage unit such as Erasable Electronic Programmable Read Only Memory (EEPROM) or a volatile storage unit such as random access memory (RAM).

The asset location database 22 is configured to store the tag identifying information of each of the asset identification tags 12 and the respective probabilistic location information.

The asset location database 22 stores the probabilistic location information calculated by the asset identification tag locating processor 20. The probabilistic location information may be organised chronologically for each respective asset identifying tag 12 according to the order in which the probabilistic location information was generated by the one or more asset identification processors 16.

The asset location database 22 may be accessible by authorised users thereby providing a pool of probabilistic location information for further analysis of asset identification movement patterns, frequency of use etc.

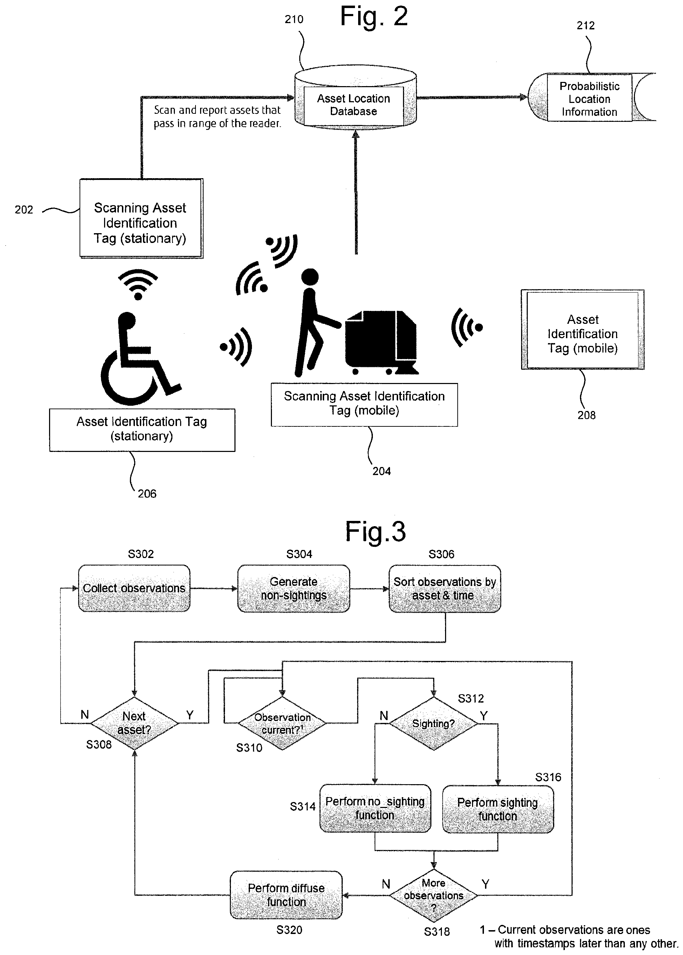

Figure 2 illustrates functional components of one particular embodiment of the asset location identification system 10. The system of Figure 2 includes scanning asset identification tags 202, 204, asset identification tags 206, 208, an asset location database 210 and probabilistic location information 212. The lines between the functional components represent the ability of the functional components to transfer information between one another. Other exchanges of data beyond those illustrated may also occur, the illustration represents specific data exchanges, as detailed below.

The asset identification tags 206, 208 are configured to transmit respective tag identifying information at a range of 5m or 10m using RFID technology.

The scanning asset identification tags 202, 204 are configured to transmit respective tag identification information at a range of 5m or 10m using RFID technology, in the same way as the asset identification tags 206, 208. The asset identification tag scanner 14 of each scanning asset identification tag 202, 204 is configured to scan for other asset identification tags 206, 208 and scanning asset identification tags 202, 204 that pass within the scan range of the asset identification tag scanner 14, and transmit the scan time, the scan location and the tag identifying information of each scanned asset identification tag 208, 206 and scanning asset identification tag 202, 204 to the asset location database 210. The scan time and scan location may be transmitted instantly, via on board WiFi, or stored in memory for a future upload to the asset location database 210. The scanning asset identification tags 202, 208 may optionally report their own location to the asset location database 210 at the same time as transmitting the scan time and scan location. The scanning asset identification tags 202, 208 may have their location entered into the asset location database 210.

The tag identifying information of each asset identification tag 206, 208 and scanning asset identification tag 202, 204 and a description of the particular asset that each asset identifying tag 206, 208 and scanning asset identification tag 202, 204 is connected to are stored in the asset location database 210. The asset location database 210 also holds a data structure indexed by locations of notional sub-regions into which the region of interest is divided. Using the data structure of locations combined with scan times, scan locations and the tag identifying information of each scanned asset identification tag 206, 208 and scanning asset identification tag 202, 204, the asset location database 210 calculates, using stochastic processes, probabilistic location information indicating the likelihood that each of the asset identification tags 206, 208 and scanning asset identification tags 202, 204 is at a particular notional sub-region. Scan times may be used, in combination with a current time at the time of calculation, and a diffusion equation, to estimate how far the asset may have travelled from a positive sighting. Such an estimate is used in the stochastic process. Scan times of non-sightings may be used to exclude non-sightings from inclusion in calculating the probabilistic location information (e.g. exclude non-sightings from scan times occurring more than a predefined time period ago). As a further alternative, for either positive sightings or non-sightings, a time decaying factor (e.g. calculated using a decaying exponential function with time since scan time as the variable) may be used to weight the influence of the non-sighting/sighting in the calculation of the probabilistic location information.

Advantageously, the location of asset identification tags 206, 208 and scanning asset identification tags 202, 204 which are not capable of determining their own location, e.g. by means of a GPS unit, is inferred in the stochastic processes of the asset location database. The inferring of locations performed by the asset location database 210 of Figure 2 is analogous to the calculation of probabilistic location information calculated by the asset identification tag locating processor 20 of Figure 1. The asset location database 210 of Figure 2 also performs the same functions as those of the one or more asset identification processors 16 and the identification sorting processor 18 of Figure 1.

In the example of Figure 2, the scanning asset identification tags 202, 204 are an example of the asset identification tags 12 of Figure 1 constrained insofar as they also comprise an asset identification tag scanner 14. The scanning asset identification tags 202, 204 are therefore capable of transmitting tag identifying information and scanning for other asset identification tags 12 in order to record the respective tag identifying information.

The example of Figure 2 also distinguishes between mobile tags 206, 204 and stationary tags 202, 208. The mobile tags 206, 204 of Figure 2 perform the same functions as that of the asset identification tags 12 of Figure 1, while also being capable of moving and/or being moved in, around and outside of the region of interest. The stationary tags 202, 208, on the other hand, are confined to a specific location within the region of interest from which they do not move. The example of the mobile scanning asset identification tag 204, provided by Figure 2, has the advantage of performing scans for asset identification tags 12 at any location within the asset location identification system 10.

Figure 3 illustrates an example of a method that could be performed by a system of Figure 1, in this particular example, in addition to the functionality discussed in relation to claim 1, the identification sorting processor performs an additional checking step at S308 and S310, and the one or more asset identification processors 16 check for whether more asset identification tags 12 have been identified by the asset identification scanners is carried out at step S318.

In the first step, S302, observations are collected by the asset identification tag scanners 14, wherein the asset identification tag scanners 14 are configured to scan their current environments for other asset identification tags 12 and record or transmit the tag identifying information of any identified asset identification tags 12 to the one or more asset identification processors 16. The asset identification tag scanners 14 are also configured to report the time at which the scan was performed and the location of the scan, even in the case of no asset identification tags 12 being detected. The scan frequency of the asset identification tag scanners 14 may be periodic or based on the movement of the asset identification tag scanners 14, for example, entering a different notional sub-region of the region of interest. The determination of whether asset identification tags 12 have entered a different notional sub-region may be based on the distance travelled, e.g. 2m.

The one or more asset identification processors 16 are configured to generate a scan time, indicating the time at which the asset identification tag scanner 14 performed the scan, a scan location, indicating the location within the region of interest of the asset identification tag scanner 14 performing the scan at the scan time. Positive scan information is subsequently generated for each identified asset identification tag 12, which comprises the scan time, scan location and the tag identifying information of the identified asset identification tag 12 for which positive scan information is being generated. Where the exact scan location is unknown, the one or more asset identification processors may approximate the scan location of the scan based on historical data from previous scans. For example, notional sub-regions surrounding the location at which a particular asset identification tag has most recently been sighted may be considered as the approximate scan location.

Furthermore, some degree of uncertainty may be added to the determination of the exact scan location by applying the diffusion function to the most recently identified scan location thereby spreading the probability of the scan location to neighbouring sub-regions.

Step S304 comprises the identification sorting processor 18 accessing the scan times and scan locations generated by the one or more asset identification processors, and recording a non-sighting for each asset identification tag 12 not having respective positive scan information for each scan time and scan location. The non-sighting includes the scan time and the scan location of the scan for which a particular asset identification tag 12 was not identified and the tag identifying information of the non-sighted asset identification tag 12.

In step S306, the identification sorting processor 18 sorts the identified asset identification tags 12 into chronological order based on the time at which each identified asset identification tag 12 was identified by an asset identification tag scanner 14. This step ensures that each identified asset identification tag 12 is processed by the asset identification tag locating processor 20 in turn whereby earlier identified asset identification tags 12 are processed before later ones.

In step S308, the identification sorting processor 18 checks that each asset identification tag 12 of the asset location identification system 10 has either had positive scan information generated or has been recorded as a non-sighting. If all asset identification tags 12 have been processed by the identification sorting processor 18, the system proceeds to step S310. If some asset identification tags 12 have not been processed by the identification sorting processor 18, the system returns to step S302 and steps S302 to S306 are repeated. At step S310 the identification sorting processor 18 identifies the most recent positive scan information, for each asset identification tag 12 that has been identified within a predetermined period of time, as the positive scan information for processing by the asset identification processor 20.

Steps S312, S314 and S316 involve two sub-processes depending on whether positive scan information has been generated for a particular asset identification tag 12 or not. In step S312, asset identification tags 12 having had positive scan information generated are sent to step S316 and asset identification tags 12 which have been recorded as a non-sighting are sent to S314. In step S316, each asset identification tag having positive scan information is assigned a conditional probability value of 1.0 at the notional sub-region of the scan location and a conditional probability value of 0.0 is assigned for all other notional sub-regions, the distribution of conditional probability values being exemplary of the probabilistic location information. Where there is uncertainty as to the exact scan location these conditional probability values may be adjusted. In step S314, each asset identification tag recorded as a non-sighting is initially assigned a conditional probability value of 0.0 for all notional sub-regions. The asset identification tag locating processor 20 then uses stochastic probability processes and Bayesian induction to calculate the conditional probability value for each non-sighted asset identification tag being at a particular notional sub-region.

In step S318, the one or more asset identification processors 16 check as to whether the asset identification scanners 14 have identified more asset identification tags 12. If more asset identification tags 12 have been identified the system returns to step S310 in order to process the newly generated positive scan information. If no more asset identification tags 12 are identified, the system proceeds to step S320 where the movement prediction processor calculates the decreasing probability that an asset identification tag 12 will remain in the same scan location as that of the recorded sighting, i.e. the movement probability. The movement probability is calculated by periodically applying a diffusion function to the probabilistic information. This diffusion function may represent knowledge about the region of interest and/or each of the assets connected to the asset identification tags. For example, this knowledge may be movement restrictions such as doorways and hallways, or movement timing such as working hours and non-working hours. Once the diffusion function has been applied, the system returns to step S308 where the identification sorting processor 18 checks that each newly identified asset identification tag 12 has had positive scan information generated.

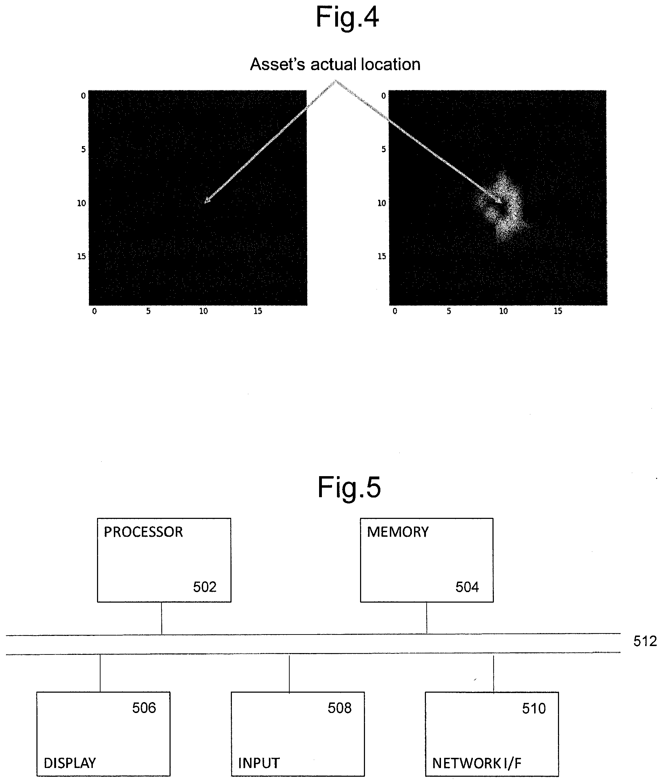

Figure 4 illustrates a graphical representation of the resulting output produced by the asset location identification system. The left hand graph of Figure 4 illustrates the known location of the asset identification tag 12 based on positive scan information, and the right hand graph illustrates the probable location of the asset identification tag 12 based on multiple non-sightings at multiple notional sub-regions.

Figure 5 is a block diagram of a computing device, such as an asset location identification system 10, which embodies the present invention, and which may be used to implement a method of an embodiment of identifying asset locations within a region of interest. The computing device comprises a processor 502, and memory, 504. Optionally, the computing device also includes a network interface 510 for communication with other computing devices, for example with other computing devices of invention embodiments.

For example, an embodiment may be composed of a network of such computing devices. Optionally, the computing device also includes one or more input mechanisms such as keyboard and mouse 508, and a display unit such as one or more monitors 506. The components are connectable to one another via a bus 512.

The memory 504 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 502 is configured to control the computing device and execute processing operations, for example executing code stored in the memory to implement the various different functions of the asset identification tags 12, the asset identification tag scanners 14, the one or more asset identification processors 16, the identification sorting processor 18 and the asset identification tag locating processor 20 described here and in the claims. The memory 504 stores data being read and written by the processor 502. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 506 may display a representation of data stored by the computing device and may also display a cursor and dialog boxes and screens enabling interaction between a user and the programs and data stored on the computing device. The input mechanisms 508 may enable a user to input data and instructions to the computing device.

The network interface (network I/F) 510 may be connected to a network, such as the Internet, and is connectable to other such computing devices via the network. The network I/F 510 may control data input/output from/to other apparatus via the network. Other peripheral devices such as microphone, speakers, printer, power supply unit, fan, case, scanner, trackerball etc. may be included in the computing device.

The asset identification tags 12, 202, 206, 204, 208 of Figures 1 to 2 may be controlled by dedicated control circuitry, or may be circuitry configured to transmit the identifying information when interrogated. Alternatively, and particularly in the case of active asset identification tags, the asset identification tags 12, 202, 206, 204, 208 of Figures 1 to 2 may include a processor 502 (or plurality thereof), executing processing instructions (a program) stored on a memory 504 (also included in tag 12), and exchanging data via a network I/F 510 (also included in tag 12), which network I/F can be, for example, an RF antenna. In particular, the processor 502 executes processing instructions to transmit respective tag identifying information, as in Figure 1. Furthermore, the processor 502 may execute processing instructions to store tag identifying information on a connected storage unit and/or to transmit, via the network I/F 510, tag identifying information to the asset identification tag scanners 14 for processing.

The asset identification tag scanners 14 of Figures 1 to 3 may include a processor 502 (or plurality thereof) executing processing instructions (a program) stored on a memory 504 and exchanging data via a network I/F 510 (both included in tag scanner 14). In particular, the processor 502 executes processing instructions to receive, via the network I/F, tag identification information from asset identification tags 12 and record the tag identifying information, as in Figure 1. Furthermore, the processor 502 may execute processing instructions to store tag identifying information on a connected storage unit and/or to transmit, via the network I/F 510, tag identifying information to one or more asset identification processors 16 for processing.

The one or more asset identification processors 16 of Figure 1 may be a processor 502 (or plurality thereof) executing processing instructions (a program) stored on a memory 504 and exchanging data via a network I/F 510. In particular, the processor 502 executes processing instructions to receive, via the network I/F, recorded tag identifying information from asset identification tag scanners 14 and generate positive scan information, as in Figure 1. Furthermore, the processor 502 may execute processing instructions to store positive scan information on a connected storage unit and/or to transmit, via the network I/F 510, positive scan information to the identification sorting processor 18 for processing.

The identification sorting processor 18 of Figure 1 may be a processor 502 (or plurality thereof) executing processing instructions (a program) stored on a memory 504 and exchanging data via a network I/F 510. In particular, the processor 502 executes processing instructions to receive, via the network I/F, positive scan information from one or more asset identification processors 16 and record as a sighting the positive scan information or record as a non-sighting the scan location and scan time, as in Figure 1. Furthermore, the processor 502 may execute processing instructions to store a record of sightings and non-sightings on a connected storage unit and/or to transmit, via the network I/F 510, the record of sightings and non-sightings to the asset identification tag locating processor 20 for processing.

The asset identification tag locating processor 20 of Figure 1 may be a processor 502 (or plurality thereof) executing processing instructions (a program) stored on a memory 504 and exchanging data via a network I/F 510. In particular, the processor 502 executes processing instructions to receive, via the network I/F, the record of sightings and non-sightings from the identification sorting processor 18 and calculate probabilistic location information, as in Figure 1. Furthermore, the processor 502 may execute processing instructions to store probabilistic location information on a connected storage unit and/or to transmit, via the network I/F 510, probabilistic location information to an authorised person.

The asset location database 22 of Figure 1 may be a processor 502 (or plurality thereof) executing processing instructions (a program) stored on a memory 504 and exchanging data via a network I/F 510. In particular, the processor 502 executes processing instructions to receive, via the network I/F, tag identifying information and probabilistic location information from one or more asset identification processors 16 and store the tag identifying information and probabilistic location information as in Figure 1. Furthermore, the processor 502 may execute processing instructions to store tag identifying information and probabilistic location information on a connected storage unit.

Methods embodying the present invention may be carried out on a computing device such as that illustrated in Figure 5. Such a computing device need not have every component illustrated in Figure 5, and may be composed of a subset of those components. A method embodying the present invention may be carried out by a single computing device in communication with one or more data storage servers via a network. The computing device may be a data storage itself storing probabilistic location information.

A method embodying the present invention may be carried out by a plurality of computing devices operating in cooperation with one another. One or more of the plurality of computing devices may be a data storage server storing at least a portion of probabilistic location information.

## Claims

1. An asset location identification system for identifying asset locations within a region of interest, the system comprising:
asset identification tags, each connectable to a respective asset and configured to transmit respective tag identifying information;
asset identification tag scanners configured to scan for asset identification tags and to record the tag identifying information being transmitted by asset identification tags identified during the scan;
one or more asset identification processors configured to receive the recorded tag identifying information from the identification tag scanners;
an identification sorting processor configured to access the tag identifying information recorded in the one or more asset identification processors and record as a non-sighting a scan time, indicating the time at which the asset identification tag scanner performed the scan, and a scan location, indicating the location within the region of interest of the asset identification tag scanner performing the scan at the scan time, against each asset identification tag not identified during the scan;
an asset identification tag locating processor configured to access the identification sorting processor and calculate probabilistic location information for each of the asset identification tags, based on the scan time and the scan location of non-sightings recorded by the identification sorting processor, wherein the probabilistic location information is a value representing the probability of the presence of the asset identification tag within each of a plurality of notional sub-regions into which the region of interest is divided; and
an asset location database configured to store the tag identifying information of each of the asset identification tags and the respective probabilistic location information.

2. An asset identification system according to claim 1, wherein:
the one or more asset identification processors are further configured to generate positive scan information, wherein the positive scan information includes the scan time, the scan location and the tag identifying information of the one or more asset identification tags identified by the asset identification scanner during the scan; and
the identification sorting processor is further configured to access the positive scan information from each of the one or more asset identification processors, and for each scan, to record as a sighting the positive scan information against each identified asset identification tag; and
the probabilistic location information is further calculated by decreasing, relative to a distribution of conditional probability values per notional sub-region, a conditional probability value at sub-regions recorded as the scan location of non-sightings of the tag by the identification sorting processor, and increasing, relative to the distribution of conditional probability values per notional sub-region, the conditional probability value at sub-regions recorded as the scan location of sighting of the tag by the identification sorting processor.

3. An asset location identification system according to claim 1 or 2, further comprising:
a movement prediction processor configured to calculate a movement probability, wherein the movement probability indicates the probability that the tag will remain in the same scan location as that of the recorded sighting by applying a diffusion function to the probabilistic location information calculated by the asset identification tag locating processor.

4. An asset location identification system according to any of the preceding claims, further comprising:
a lost asset identification tag notification processor configured to access the asset location database and flag as potentially lost each asset identification tag for which a sighting has not been recorded for a predetermined period of time and/or a predetermined number of scans.

5. An asset location identification system according to any of the preceding claims, wherein
one or more of the asset identification tags are connectable to a respective stationary asset which remain in a fixed location within the region of interest, wherein the location of the stationary asset within the region of interest is recorded in the asset location database.

6. An asset location identification system according to any of the preceding claims, wherein
one or more of the asset identification tags are connectable to a respective mobile asset which moves between different locations inside and/or outside of the region of interest, wherein the location of the mobile asset within the region of interest is determined by an internal navigation system, and the determined location is transmitted to the asset identification tag locating processor for use in calculating probabilistic location information.

7. An asset location identification system according to any of the preceding claims, wherein each of the asset identification tag scanners further comprises an identification tag signal measuring sensor configured to measure a signal strength of a signal carrying the tag identifying information being transmitted by each respective asset identification tag and to report the measured signal strength to the asset identification tag locating processor via the asset identification processor, the asset identification tag locating processor being configured to determine the location of each scanned asset identification tag based on the measured signal strength and the location of the asset identification tag scanner performing the scan.

8. An asset location identification system according to any of the preceding claims, wherein
the asset identification tag locating processor is configured to calculate probabilistic location information for each of the asset identification tags at plural instances over a time period;
the system further comprising:
a tracking processor configured to, for a particular asset identification tag, use each of the plural instances of the probabilistic location information to identify a most likely location of the particular asset identification tag, and to track a most likely location of the particular asset identification tag over the time period by linking the most likely locations according to chronological order of the respective instances.

9. An asset location identification system according to any of the preceding claims, wherein
the asset identification tags are radio frequency asset identification tags which transmit the respective tag identifying information.

10. An asset location identification system according to any of the preceding claims, wherein
the asset identification tag scanners are radio frequency asset identification tag readers which read the tag identifying information which is transmitted by the radio frequency identification tags.

11. An asset location identification system according to any of the preceding claims, wherein the identification sorting processor is further configured to:
identify the most recent positive scan information, generated by the one or more asset identification processors for a respective asset identification tag;
record the identified most recent positive scan information against the respective asset identification tag; and
indicate to the asset identification tag locating processor the most recent positive scan information as the positive scan information for processing.

12. An asset location identification system according to any of the preceding claims, wherein the identification sorting processor is further configured to group the sightings and non-sightings into time groups, where each time group contain sightings and non-sightings which were recorded within a predetermined time period, and the asset identification tag locating processor calculates probabilistic location information for sightings and non-sightings contained within the most recent time group.

13. An asset location identification system according to any of the preceding claims, wherein the asset identification locating processor is further configured to determine likely locations of an asset identification tag based on the conditional probability value for each notional sub-region, wherein notional sub-regions having greater conditional probability values than other notional sub-regions are ranked as more likely locations of the asset identification tag.

14. An asset location identification method for identifying asset locations within a region of interest, the method comprising:
transmitting respective tag identifying information from asset identification tags connected to respective assets;
scanning for asset identification tags and recording the tag identifying information being transmitted by asset identification tags identified during the scanning;
accessing the recorded tag identifying information and recording as a non-sighting a scan time, indicating the scanning time, and a scan location, indicating the location within the region of interest that the scanning is performed at the scan time, against each asset identification tag not identified during the scanning;
calculating probabilistic location information for each of the asset identification tags, based on the scan time and the scan location of non-sightings recorded by the identification sorting processor, wherein the probabilistic location information is a value representing the probability of the presence of the asset identification tag within each of a plurality of notional sub-regions into which the region of interest is divided; and
storing the tag identifying information of each of the asset identification tags and the respective probabilistic location information.

15. A computer program which, when executed by a computing device, causes the computing device to execute the method according to claim 14.
